Europäisches Patentamt

European Patent Office

Office européen des brevets

(19)

(11) Numéro de publication : **0 043 587**
**B1**

(12) **FASCICULE DE BREVET EUROPÉEN**

(45) Date de publication du fascicule du brevet :
03.04.85

(51) Int. Cl.⁴ : **G 01 P   1/04**, F 16 B 21/08

(21) Numéro de dépôt : **81105278.6**

(22) Date de dépôt : **08.07.81**

(54) **Dispositif de prise de mouvement pour tachymètre.**

(30) Priorité : 09.07.80 FR 8015281

(43) Date de publication de la demande :
**13.01.82 Bulletin 82/02**

(45) Mention de la délivrance du brevet :
**03.04.85 Bulletin 85/14**

(84) Etats contractants désignés :
**BE DE GB IT NL SE**

(56) Documents cités :
**BE-A-   648 576**
**CH-A-   313 282**
**FR-A- 2 313 679**
**GB-A- 1 337 903**
**US-A- 3 609 822**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Lamy, Jean-Michel**
**9, Villa Brune**
**F-75014 Paris (FR)**

(74) Mandataire : **Casalonga, Axel et al**
**BUREAU D.A. CASALONGA OFFICE JOSSE & PETIT**
**Baaderstrasse 12-14**
**D-8000 München 5 (DE)**

Jouve, 18, rue St-Denis, 75001 Paris, France

## Description

La présente invention se rapporte à un dispositif de prise de mouvement pour tachymètre à montage direct dans le carter.

On connaît plusieurs dispositifs de prise de mouvement pour tachymètre, notamment ceux décrits dans les brevets US-A-2 793 532, US-A-2 801 530, US-A-3 964 321 et US-A-4 154 118 ainsi que dans les brevets BE-A-648 576, CH-A-313 282 et FR-A-2 313 679, et qui correspondent sensiblement à la configuration représentée sur la Fig. 1 comportant un ensemble rapporté dans le carter comme représenté sur cette figure.

Tous ces dispositifs comprennent une vis 1, solidaire de l'arbre dont on veut prélever le mouvement de rotation, et qui entraîne un pignon 2, solidaire d'un axe 6 de diamètre plus réduit que celui du pignon 2, ledit axe étant monté tourillonnant dans un support 5 formant douille intermédiaire entre le diamètre de l'axe et celui du trou de passage dans le carter 4, par lequel est introduit le pignon 2 depuis l'extérieur, et dont le diamètre est par conséquent nécessairement plus grand que celui du pignon 2.

Les divers documents diffèrent seulement par la matière dont est assurée la fixation de cette douille intermédiaire dans le trou du carter. Dans certains cas, comme dans le brevet FR-A-2 313 679 susvisé, la douille est excentrique pour permettre en outre un réglage d'entre axes.

Il en résulte que ce montage nécessite toujours deux joints d'étanchéité 9 et 10 en plus de la pièce supplémentaire que constitue cette douille 5.

Ce type de dispositif est donc relativement complexe par suite de la présence du support intermédiaire et des deux joints. De plus il est sujet à un mauvais refroidissement du dispositif et à la présence de deux sources de fuite.

Le montage exige en outre un moyen de fixation plus ou moins complexe du support dans le carter.

Le but de la présente invention est donc de réaliser un dispositif de prise de mouvement pour tachymètre à montage simplifié n'ayant qu'une source de fuite et à fixation rapide.

A cet effet l'invention a pour objet un dispositif de prise de mouvement pour tachymètre comprenant un engrenage constitué d'une vis entraînant un pignon qui est porté par un axe, caractérisé en ce que le pignon vient se monter directement dans le carter, lequel axe vient s'engager dans ledit pignon avec lequel il est rendu solidaire en rotation par des cannelures et tenu dans le sens axial par un système d'agrafage.

Selon un mode de réalisation préféré de l'invention le système d'agrafage de l'axe est réalisé par deux tenons disposés dans le pignon en plastique lesquels tenons viennent s'engager dans une gorge dudit axe en plastique, l'axe possédant à l'extrémité muni de la gorge d'une fente afin d'avoir la souplesse nécessaire.

De plus l'axe possède un système d'étanchéité double comprenant un joint torique et une saignée en forme d'hélice.

Selon un mode de réalisation préféré de l'invention, le câble du tachymètre est fixé sur l'axe à l'aide d'une agrafe se montant directement dans le carter.

Un tel dispositif suivant l'invention présente l'avantage d'éviter les inconvénients énumérés ci-dessus, du fait d'un montage direct de l'axe dans le carter.

De plus, ce dispositif est simple et il se monte rapidement.

D'autres caractéristiques et avantages ressortiront de la description qui suit d'un mode de réalisation de la présente invention donné à titre d'exemple, en référence aux dessins annexés sur lesquels :

la figure 2 représente en coupe longitudinale l'axe du dispositif selon l'invention,

la figure 3 est une vue en coupe du dispositif suivant III-III de la figure 2,

la figure 4 est une vue du pignon seul en coupe,

la figure 5 est une vue de l'axe seul.

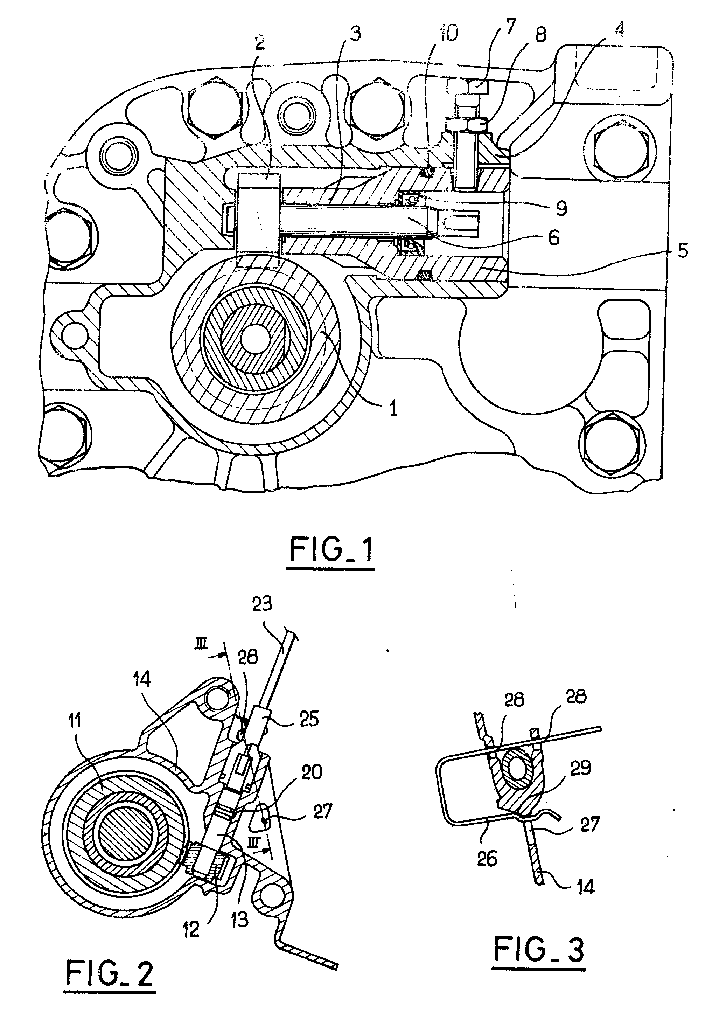

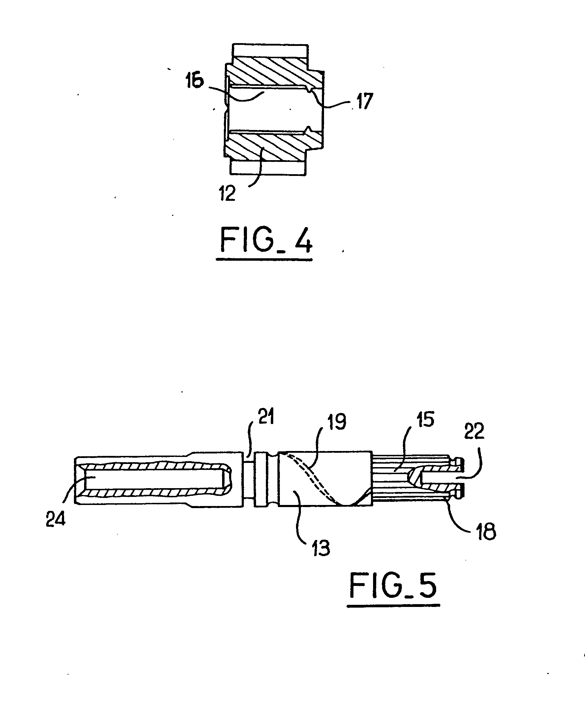

La figure 2 montre l'ensemble du dispositif de l'invention et comprend une vis (11) de commande du pignon (12). La vis et le pignon sont en matière plastique. Le pignon (12) est porté par un axe (13) qui vient se monter directement dans le carter (14). L'axe (13) est lui aussi en matière plastique. L'axe (13) vient s'engager dans le pignon (12) avec lequel il est rendu solidaire en rotation par des cannelures (15) et (16) (voir figures 4 et 5). De plus l'axe (13) est tenu dans le sens axial par un système d'agrafage du pignon (12) sur l'axe (13). Le pignon (12) comporte deux tenons (17) (voir figure 4) qui viennent se bloquer dans une gorge (18) de l'axe (13) (voir figure 5).

Sur les figures 2 et 5 on voit que l'axe (13) est muni d'une étanchéité double : une saignée en forme d'hélice (19) et un joint torique (20) monté dans une gorge (21). De plus l'axe (13) a une fente (22) dans la partie située à côté de la gorge d'agrafage (18). Cette fente donne de la souplesse à l'extrémité de l'axe (13) et permet un agrafage correct de l'axe (13) sur le pignon (12).

Pour le montage du dispositif (voir figures 2, 3, 5), le pignon (12) est d'abord monté dans le carter et l'on engage ensuite l'axe (13) dans le carter (14) et le pignon (12) dans lequel il vient s'agrafer. Le câble (23) du tachymètre vient ensuite rentrer dans un trou carré (24) de l'axe (13), et l'embout (25) dudit câble (23) est tenu sur l'axe (13) par une agrafe (26). Cette agrafe (26) se monte directement dans des trous (27 et 28) bruts de fonderie du carter (14) en utilisant un décrochement (29) dudit carter.

## Revendications

1. Dispositif de prise de mouvement pour tachymètre comprenant un engrenage constitué d'une vis (11) entraînant un pignon (12) qui est porté par un axe (13), caractérisé en ce que le pignon (12) vient se monter à étanchéité directement dans un carter (14), lequel axe (13) vient s'engager dans ledit pignon (12) monté au préalable dans le carter et avec lequel il est rendu solidaire en rotation par des cannelures (15 et 16) et tenu suivant le sens longitudinal de l'axe (13) par un système d'agrafage.

2. Dispositif de prise de mouvement selon la revendication 1, caractérisé en ce que le pignon (12) et l'axe (13) sont en matière plastique, et que le système d'agrafage de l'axe (13) sur le pignon (12) est réalisé par la coopération de deux tenons (17) disposés dans le pignon (12) et qui s'engagent dans une gorge (18) dudit axe (13) lequel est fendu en bout (22) afin d'avoir la souplesse nécessaire pour permettre l'agrafage correct de l'axe (13) sur le pignon (12).

## Claims

1. A tachometer drive system comprising a gear takeoff consisting of a worm (11) driving a pinion (12) carried by a shaft (13), characterized in that the pinion (12) is sealinghly mounted directly in a casing (14), which shaft (13) fits into the said pinion (12) which is installed in the casing beforehand, the said pinion (12) being fixed to the saft in rotation by splines (15 and 16) and held in the longitudinal direction of the shaft (13) by a clip system.

2. The tachometer drive system according to claim 1, characterized in that the pinion (12) and the shaft (13) are made of plastics material and in that the system clipping the shaft (13) into the pinion (12) is implemented by means of two lugs (17) located inside the pinion (12) which engage with a groove (18) round the said shaft (13) which is split at the end (22) so that it is flexible enough to allow the shaft (13) to be clipped properly into the pinion (12).

## Ansprüche

1. Antriebsvorrichtung für Tachometer, mit einem Antrieb bestehend aus einer Schnecke (11), die ein von einer Welle (13) getragenes Ritzel (12) antreibt, dadurch gekennzeichnet, daß das Ritzel (12) unmittelbar dicht in eine Wanne (14) eingesetzt ist, wobei die genannte Welle (13) in das vorher in die Wanne eingesetzte Ritzel (12) eingreift, mit dem es durch Keilnute (5, 16) drehfest verbunden ist und in Längsrichtung der Welle (13) durch ein Klammersystem gehalten wird.

2. Antriebsvorrichtung gemäß Anspruch 1, dadurch gekennzeichnet, daß das Ritzel (12) und die Welle (13) aus Kunststoff bestehen und das System zum Anklammern der Welle (13) am Ritzel (12) durch das Zusammenwirken zweier im Ritzel (12) angeordneten Zapfen (17) ausgeführt ist, die in eine Nut (18) der genannten Welle (13) eingreifen, die am Ende (22) geschlitzt ist um die erforderliche Elastizität zwecks Ermöglichen der richtigen Verklammerung der Welle (13) auf dem Ritzel zu erreichen.

FIG_1

FIG_2

FIG_3

16    17

12

## FIG_4

21    19    15    22

24    13    18

## FIG_5